**Europäisches Patentamt**

**European Patent Office**

**Office européen des brevets**

(19)

(11) Publication number: **0 438 827 A1**

# EUROPEAN PATENT APPLICATION

(12)

(21) Application number: **90203393.5**

(22) Date of filing: **18.12.90**

(51) Int. Cl.⁵: **A47L 9/28**, **H02P 7/638**, **H02H 7/085**

(30) Priority: **19.01.90 NL 9000129**

(43) Date of publication of application:
**31.07.91 Bulletin 91/31**

(84) Designated Contracting States:
**DE ES FR GB IT NL SE**

(71) Applicant: **N.V. Philips' Gloeilampenfabrieken**
**Groenewoudseweg 1**
**NL-5621 BA Eindhoven(NL)**

(72) Inventor: **Dekker, Jan Hendrik**
**c/o INT. OCTROOIBUREAU B.V., Prof.**
**Holstlaan 6**
**NL-5656 AA Eindhoven(NL)**

(74) Representative: **Faessen, Louis Marie**
**Hubertus et al**
**INTERNATIONAAL OCTROOIBUREAU B.V. 6**
**Prof. Holstlaan**
**NL-5656 AA Eindhoven(NL)**

(54) **Apparatus comprising an electric motor having a variable motor power.**

(57) An electrically driven apparatus, for example a vacuum cleaner with "boost" function is described, which boost function is switched off and blocked dependent on the temperature detected by a sensor arranged proximate to the motor. This provides the possibility of maximum use of the boost function without the risk of the motor or the apparatus being damaged.

EP 0 438 827 A1

## APPARATUS COMPRISING AN ELECTRIC MOTOR HAVING A VARIABLE MOTOR POWER.

The invention relates to an apparatus, for example a vacuum cleaner, comprising an electric motor having a variable motor power and provided with a control circuit for controlling the motor power, said control circuit comprising means for temporarily increasing the motor power to a level above the maximum power which the apparatus can withstand for a long time.

When using an electric apparatus such as a vacuum cleaner, the normal motor power, even when set at its maximum value, may not be sufficient. At such a moment it is desirable to have temporarily a larger power, as in the case of vacuum cleaning for removing, for example threads from a carpet or for cleaning crannies which are difficult to access. The maximum normal power which the motor or the apparatus can withstand for a long time will hereinafter be referred to as the nominal power.

An apparatus as described in the opening paragraph provides a solution and is known from WO 87/01921. This document describes a vacuum cleaner whose power can be increased above the nominal power, if so wished by the user. However, this means that the development of heat in the motor increases to such an extent that long-time use of this high power leads to damage of the motor or of the vacuum cleaner. Switching on the more than nominal power will hereinafter be referred to as the "boost" function. In the known vacuum cleaner damage is prevented during the boost function by terminating this function after a first predetermined period (10 sec) and by subsequently preventing the boost function from being switched on again at least for a second predetermined period (20 sec). During the second predetermined period the motor temperature decreases to a safe value again.

A purely time-controlled system for preventing damage of the motor or the apparatus has the drawback that the use of the boost function is blocked too early or unnecessarily in the case of a satisfactory cooling of the motor, for example, in the case of a low ambient temperature. To avoid this, the apparatus according to the invention is characterized in that the control circuit comprises a temperature switch for reducing the motor power when the temperature at the temperature switch reaches a first limit value.

Thus, the actual motor temperature is measured in the apparatus according to the invention so that the high power is only switched off when the temperature increases to a fixed limit value above which there is actually a risk of damage. This also prevents damage in the case of poor cooling, for example due to a full dust bag.

The apparatus according to the invention is further characterized in that the control circuit comprises a second temperature switch for blocking said means for increasing the motor power when the temperature at the second temperature switch exceeds a second limit value. When the switch-off temperature is reached and the high power is switched off, the temperature of the motor decreases. When the high power is switched on again, it should be possible to supply this power for at least several seconds to enable the user to utilize the larger power. Upon renewed switching on, the motor temperature should thus have a certain difference with respect to the maximum temperature as fixed by said first limit value before the boost function can be switched on again. Since the boost function is blocked as described, it is ensured that this temperature difference exists when the boost function is switched on.

The apparatus is preferably characterized in that the temperature switch and the second temperature switch comprise a common temperature-sensitive element and in that the second limit value is lower than the first limit value. The heat-sensitive element is, for example a heat-sensitive resistor such as an NTC or PTC which is arranged proximate to and is brought in thermal contact with a part which may be rapidly damaged in the case of an increasing temperature, for example, a bearing or a winding of the electric motor or a vulnerable part of the housing. The resistor is arranged, for example in a double measuring circuit having two threshold values. The advantage of a single heat-sensitive element is that the temperature for the two threshold values is measured in the same manner.

An embodiment of the apparatus according to the invention is characterized in that the control circuit is adapted to reduce the motor power to the maximum power which the apparatus can withstand for a long time when the temperature at the temperature switch reaches the first limit value. By switching on the boost function, the user indicates that the power used till that instant is insufficient. With this measure it is achieved that the power best suiting the user's wishes is automatically switched on when the more than nominal power is no longer available because the motor temperature has increased too much. The control circuit may of course be adapted to reduce the motor power to the adjusted power when the temperature at the temperature switch reaches the first limit value.

An apparatus according to the invention may be further characterized in that the control circuit is adapted to switch off the motor completely when the temperature reaches a further limit value. In this way a separate thermal protector for the motor can be dispensed with. The further maximum value of the motor temperature is, for example, above said first limit value at which the boost function is switched off. The further limit value may also be lower, but then a more complicated control circuit is required to prevent the protector from being activated and the motor from stalling immediately after the boost function has been switched off.

These and other more detailed aspects of the invention will now be described in greater detail with reference to the following description and the drawings.

The drawings show the following aspects of the invention:

Fig. 1 shows the temperature variation in the motor of an apparatus according to the invention,
Fig. 2 shows diagrammatically a circuit for use in an apparatus according to the invention,
Fig. 3 shows a circuit which is extended with a thermal protector.

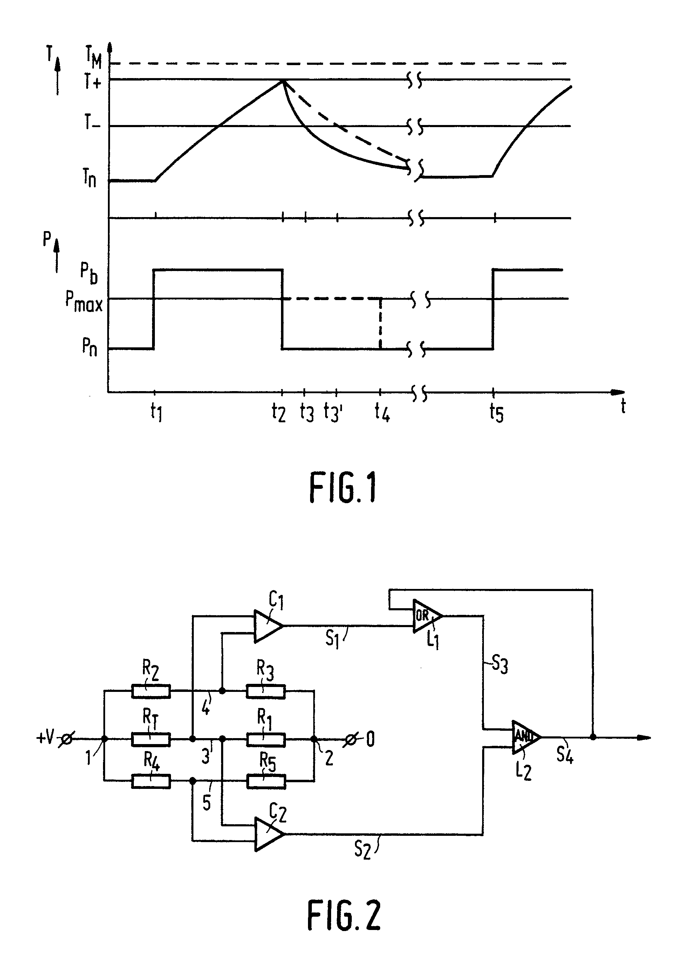

In Fig. 1 the power P supplied by the motor and the temperature T of the motor are plotted against time t. Until the instant t1 the motor operates at a power Pn which is, for example, lower than the nominal power Pmax. The temperature of the motor has stabilized at a value Tn at this power. At the instant t1 the boost function is switched on, increasing the power of the motor to a value Pb above the maximum nominal power Pmax. This is effected by increasing the voltage applied to the motor. When the voltage is increased to 10% above the voltage required for the nominal power, the motor supplies approximately 20% more power than the nominal power. This increased power is denoted by Pb in the Figure. The heat developed in the motor causes the temperature of the motor and its surroundings to increase above the value Tn. As soon as the temperature has reached the maximum admissible value T+, at the instant t2, the boost function is switched off by the control circuit and the motor power is reduced again to the previous value Pn. The boost function remains subsequently blocked until the temperature has decreased to a value T- at the instant t3. The boost function may be switched on again at a later instant, the instant t5 after t3.

The control circuit may be adapted in such a way that the motor is not switched back to the previous power Pn but to the nominal power Pmax after the boost function has been switched off when the temperature T+ is reached at the instant t2. This means that the temperature of the motor decreases more slowly so that the boost function remains blocked for a slightly longer time, until the instant t3'. The motor power is only reduced to the previous power Pn after an action by the user at the instant t4 or in another manner, for example via a dust detector. This is illustrated by means of a broken line in the Figure. Such a control may be preferred because the user who switches on the boost function indicates that the previous power Pn is no longer sufficient at that moment. By reducing the power at the instant t2 to the maximum nominal power, the power which best suits the user's wishes remains available.

Fig. 2 shows diagrammatically a circuit with which the termination and blocking of the boost function can be controlled dependent on the motor temperature. In the circuit shown the temperature sensor is a thermistor RT, for example an NTC or PTC resistor. The resistor RT is incorporated in a double measuring bridge. The measuring bridge comprises three series arrangements of two resistors each which are arranged between two terminals 1 and 2. The first series arrangement comprises the thermistor RT and a resistor R1, the second series arrangement comprises two resistors R2 and R3 and the third series arrangement comprises the two resistors R4 and R5. A voltage applied across the terminals 1 and 2 leads in known manner to fractional voltages at the points 3, 4 and 5 between the resistors of the series arrangements. Consequently, the value of the resistor RT and hence the temperature can be compared with two threshold values which are determined by the ratio between the resistances of R2 and R3 and the resistances of R4 and R5. It is determined by means of comparators C1 and C2 whether the temperature is above the threshold values T- and T+. The resistors RT, R1, R2 and R3 are dimensioned in such a way that the output signal of the comparator C1 is low when the temperature is lower than T+ and that the comparator changes over and supplies a high output signal when the motor temperature T+ is reached. In conjunction with the resistors R4 and R5, the comparator C2 fulfils the same function at a threshold value T-.

After the boost function has been switched on, the value of the output signal S2 of the comparator C2 changes from low to high when the threshold value T- is exceeded. When the temperature further increases to T+, the output signal S1 of the comparator C1 also changes from low to high. This signal is applied to one of the inputs of a logic OR circuit L1 so that the output signal S3 of this OR circuit also changes from low to high. The signals S2 and S3 are applied to the inputs of a second logic circuit L2 having an AND function. Since the two input signals are high, the output signal S4 of this second circuit L2 also changes from low to high. This signal S4 is further used to switch off the boost function and to keep it blocked. The boost function remains blocked because the signal S4 is also applied to the second input of the OR circuit L1. When the temperature comes below the value T+ and hence the signal S1 becomes low, the result is that the output signal S3 of the OR circuit remains high until the output signal S4 of the AND circuit also becomes low. This happens as soon as the signal S2 has become low because the temperature has decreased below the bottom threshold value T-.

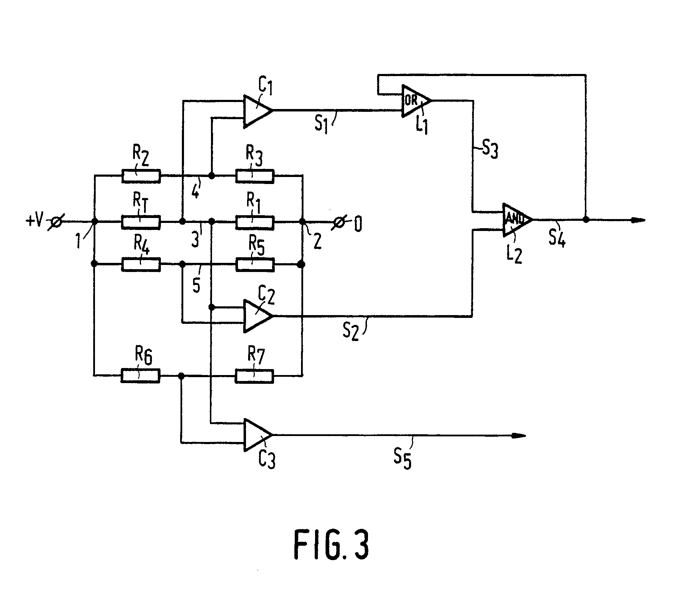

Fig. 3 shows the circuit of Fig. 2 with the addition of a fourth series arrangement for protecting the motor at a too high motor temperature. The fourth series arrangement comprises the resistors R6 and R7. A third comparator C3 is also added to the circuit. As soon as the output S5 of the comparator C3 changes from low to high, the motor is switched off and blocked until the temperature has decreased again.

A thermal protector for the apparatus is known per se, but according to the invention it can be combined with the temperature sensor for switching off the boost function. The resistors R6 and R7 are preferably dimensioned in such a way that the protector is activated as soon as the temperature T+ has been exceeded by several degrees, which is indicated by TM in Fig. 1.

The apparatus driven by the motor is, for example a vacuum cleaner or another domestic appliance such as, for example a food processor. The same circuit can also be used in an electric drill or other tools driven by electric motors.

## Claims

1. An apparatus, for example a vacuum cleaner, comprising an electric motor having a variable motor power and provided with a control circuit for controlling the motor power, said control circuit comprising means for temporarily increasing the motor power to a level above the maximum power which the apparatus can withstand for a long time, characterized in that the control circuit comprises a temperature switch for reducing the motor power when the temperature at the temperature switch reaches a first limit value.

2. An apparatus as claimed in Claim 1, characterized in that the control circuit comprises a second temperature switch for blocking said means for increasing the motor power when the temperature at the second temperature switch exceeds a second limit value.

3. An apparatus as claimed in Claim 2, characterized in that the temperature switch and the second temperature switch comprise a common temperature-sensitive element, and in that the second limit value is lower than the first limit value.

4. An apparatus as claimed in Claim 1, 2 or 3, characterized in that the control circuit is adapted to reduce the motor power to the maximum power which the apparatus can withstand for a long time when the temperature at the temperature switch reaches the first limit value.

5. An apparatus as claimed in Claim 1, 2 or 3, characterized in that the control circuit is adapted to reduce the motor power to the adjusted power when the temperature at the temperature switch reaches the first limit value.

6. An apparatus as claimed in any one of the preceding Claims, characterized in that the control circuit is adapted to switch off the motor completely when the temperature reaches a further limit value.

FIG.1

FIG.2

5

FIG. 3

European
Patent Office

EUROPEAN SEARCH
REPORT

Application Number

EP 90 20 3393

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 712 233 (LICENTIA) <br> * claims 10-13 * * column 5, line 60 - column 6, line 11 * * column 7, line 15 - line 26 * | 1,3,4,6 | A 47 L 9/28 <br> H 02 P 7/638 <br> H 02 H 7/085 |
| | – – – | | |
| X | DE-A-3 248 217 (KURZ) <br> * the whole document * | 1,4 | |
| | – – – | | |
| X | PATENT ABSTRACTS OF JAPAN vol. 13, no. 252 (M-836)(3600) June 12, 1989 <br> & JP-A-01 056 996 (MATSHUSHITA SEIKO CO. LTD ) March 3, 1989 <br> * the whole document * | 1,4 | |
| | – – – | | |
| X | PATENT ABSTRACTS OF JAPAN vol. 13, no. 252 (M-836)(3600) June 12, 1989 <br> & JP-A-01 056 995 (MATSHUSHITA SEIKO CO. LTD ) March 3, 1989 <br> * the whole document * | 1,4 | |
| | – – – | | |
| X | PATENT ABSTRACTS OF JAPAN vol. 13, no. 400 (M-867)(3748) September 6, 1989 <br> & JP-A-01 142 297 (MATSHUSHITA SEIKO CO. LTD ) June 5, 1989 <br> * the whole document * | 1,4 | TECHNICAL FIELDS SEARCHED (Int. Cl.5) <br><br> A 47 L <br> H 02 P <br> H 02 H |
| | – – – | | |
| X | DE-A-3 046 860 (LICENTIA) <br> * page 5, line 16 - page 6, line 5 * | 1,4 | |
| | – – – | | |
| A | FR-A-2 096 641 (COMPAGNIE GENERALE D'ELECTRICITE ) <br> * claim 1 * | 1,2,6 | |
| | – – – | | |
| | –/– | | |

The present search report has been drawn up for all claims

| Place of search | Date of completion of search | Examiner |
|---|---|---|
| The Hague | 13 May 91 | SCHARTZ J. |

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | WO-A-8 701 921   (ELECTROLUX)<br>* the whole document * | 1 | |
| A | EP-A-0 299 322   (SIEMENS AG)<br>* the whole document * | 1 | |
| A | EP-A-0 308 517   (HAYASHI)<br>* the whole document * | 1 | |
| | | | **TECHNICAL FIELDS SEARCHED (Int. Cl.5)** |

The present search report has been drawn up for all claims

| Place of search | Date of completion of search | Examiner |
|---|---|---|
| The Hague | 13 May 91 | SCHARTZ J. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

&: member of the same patent family, corresponding
   document